# EUROPÄISCHE PATENTANMELDUNG

(11) **EP 0 875 358 A2**
(43) Veröffentlichungstag der Anmeldung: **04.11.1998**
(21) Anmeldenummer: 98104080.1
(22) Anmeldetag: 07.03.1998
(51) Int. Cl.: B29C 53/08, B29C 53/84, B29C 35/12

(54) **Verfahren zum Thermoformen von Rohren mittels eines HF-Feldes**

(30) Priorität: 02.05.1997 DE 19718505
(71) Anmelder: HÜLS AKTIENGESELLSCHAFT, 45764 Marl (DE)
(72) Erfinder: Brudny, Günther, 45772 Marl (DE); Göring, Rainer, 46325 Borken (DE); Schmitz, Guido, Dr., 48249 Dülmen (DE)

(57) **Zusammenfassung**

Ein Thermoformverfahren zur Umformung eines Kunststoffrohres ist dadurch gekennzeichnet, daß die erforderliche Wärme mittels eines Hochfrequenzfeldes eingebracht wird.

Die erfindungsgemäß thermogeformten Rohre finden Verwendung z. B. im Kraftfahrzeugsektor.

## Beschreibung

Gegenstand der Erfindung sind Rohre, die mittels eines Hochfrequenzfeldes thermogeformt sind, sowie ein Verfahren zu ihrer Herstellung.

Rohre, die z. B. im Kraftfahrzeugsektor als kraftstofführende Leitungen eingesetzt werden, besitzen meist eine hohe Steifigkeit. Da sie nicht als gerade Leitung in einem PKW verlegt werden können, müssen diese Leitungen thermogeformt werden. Bei diesem Umformverfahren wird das vorher gerade Rohr bleibend so verformt, daß es Biegungen und Krümmungen an bestimmten, geforderten Stellen beibehält.

Eine heutzutage weit verbreitete Methode des Thermoformens von Rohren ist das Thermoformen mit Polyethylenglykol. Bei diesem Verfahren wird das Rohr in der Regel in eine Schablone eingelegt und samt Schablone in ein Polyethylenglykolbad eingetaucht. Dieses Bad ist auf eine dem Werkstoff des Rohres entsprechende Temperatur aufgeheizt, so daß sich das Rohr von außen erwärmt und weich wird.

Damit werden die inneren Widerstände des Rohres gegen die Biegung abgebaut, das heißt, die durch die Biegung eingebrachten Spannungen relaxieren. Nach dem eigentlichen Thermoformen wird das Rohr mit der Schablone aus dem Bad genommen und in einem Kühlbad wieder auf Raumtemperatur abgekühlt, so daß die Sollkontur des Rohres fixiert wird. Ein Nachteil des Thermoformens mit Polyethylenglykol ist die Abwasserbelastung, die durch das Verfahren verursacht wird. Dies wird vor dem Hintergrund strengerer gesetzlicher Bestimmungen zunehmend problematisch, was das Verfahren aus Kostengründen unattraktiv macht.

Ein weiteres Verfahren ist das Thermoformen mit Heißluft, wobei das Rohr zusammen mit der Schablone in einem Heißluftofen gelagert wird. Aufgrund des schlechteren Wärmeübergangs zwischen Heißluft und Rohr sind die Zykluszeiten länger als die beim Thermoformen mit Polyethylenglykol.

Beim Thermoformen mit Heißdampf wird das Rohr ebenfalls in eine Schablone eingelegt. Danach wird Heißdampf durch das Innere des Rohres geleitet, so daß sich das Rohr von innen aufwärmt. Nachdem die Widerstände des Rohres gegen die Biegung abgebaut sind wird das Rohr wiederum gekühlt und somit die Kontur im Rohr fixiert. Das Thermoformen mit Heißdampf ist allerdings kosten- und zeitintensiv.

Ein anderer Weg wird bei der Kontakterwärmung beschritten. Hier wird das Rohr in den zu thermoformenden Bereichen mittels beheizter Metallschablonen erwärmt. Auch hier führen die hohen Thermoformzeiten zu einem nicht ausreichend wirtschaftlichen Verfahren.

Allen diesen Verfahren ist gemein, daß die Erwärmung des Rohres weitgehend über Wärmeleitung erfolgen muß, was aufgrund der schlechten Wärmeleitfähigkeit der Kunststoffe zeitaufwendig ist. Zur Reduzierung der Thermoformzeiten wird daher häufig versucht, die Temperaturen der Heizmedien zu erhöhen. Hierbei kann es dann aber zu einer Überhitzung der äußeren Oberfläche des Rohres bis hin zur Verbrennung kommen, was sich negativ auf die Eigenschaften des Rohres auswirken kann.

Als weiteres Verfahren zur Thermoformung wurde die Erhitzung des Rohres mit IR-Strahlung entwickelt. Hierbei wird das Rohr mit Licht aus dem infraroten Spektrum bestrahlt. Die Strahlung wird vom Rohr mehr oder weniger gut absorbiert und in Wärme umgesetzt. Mehrere Punkte sind an diesem Verfahren jedoch problematisch. Zum einen ist eine gleichmäßige Bestrahlung des Rohres über dem Umfang schwierig. Dies liegt zum Beispiel daran, daß die Rohre in Schablonen eingelegt sind und das Rohr so nicht von allen Seiten für die Strahlung frei zugänglich ist. Daher wird das Rohr ungleichmäßig aufgeheizt, was sich auf die Gebrauchseigenschaften des Rohres negativ auswirken kann. Ein weiterer großer Nachteil der IR-Strahlung ist die Tatsache, daß die verschiedenen Formmassen, die für Kraftstoffleitungen verwendet werden, die IR-Strahlung unterschiedlich gut absorbieren. So ist die Absorption z. B. schwarz eingefärbter Rohrformmassen sehr gut, so daß die Strahlung nahezu unmittelbar an der Rohroberfläche absorbiert wird. Die Gefahr lokaler Verbrennungen ist hier allerdings besonders groß. Bei nicht eingefärbten Produkten ist die Absorption der Strahlung in der Regel wesentlich schlechter, so daß sich die Zykluszeiten aus diesem Grunde verlängern.

Somit steht bislang kein zufriedenstellendes Verfahren zur Verfügung, mit dem die Rohre innerhalb kürzer Zeit ohne Beeinträchtigung der Rohreigenschaften thermogeformt werden können.

Eine Aufgabe der vorliegenden Erfindung ist daher, ein Verfahren zur Thermoformung von Rohren bereitzustellen, das eine kurze Zykluszeit mit einer schonenden Aufwärmung der Rohre verbindet.

Eine weitere Aufgabe der Erfindung besteht darin, ein Verfahren zur Thermoformung von Rohren bereitzustellen, das möglichst wenig Energie verbraucht und keine umweltrelevanten Emissionen verursacht.

Darüber hinaus sollte ein derartiges Verfahren mit einem Rohr funktionieren, das in eine Schablone eingelegt um eine Handhabung des heißen Rohres zu vermeiden.

Als weitere Aufgabe sollte es möglich sein, das Rohr nur partiell, d. h. im Krümmungsbereich, zu erwärmen und damit thermozuformen.

Schließlich sollte sich ein derartiges Verfahren nicht nur für einschichtige Rohre eignen, sondern auch für Mehrschichtrohre, die im Automobilbau in zunehmendem Maße Verwendung finden.

Diese Aufgaben werden durch ein Thermoformverfahren zur Umformung eines Kunststoffrohres gelöst, bei dem die erforderliche Wärme mittels eines Hochfrequenzfeldes eingebracht wird.

Hierbei wird ein HF-Generator verwendet, der niederfrequenten in hochfrequenten Wechselstrom umwandelt. Die Frequenz des umgewandelten Stromes liegt üblicherweise in der Größenordnung von etwa 27 Mhz, es können aber auch andere Frequenzen benutzt werden. Das hochfrequente elektrische Wechselfeld wird zwischen zwei Elektroden erzeugt. Die Moleküle geeigneter Kunststoffe, die sich zwischen den Elektroden befinden, werden aufgrund ihres Dipolcharakters in Schwingungen versetzt und das Kunststoffrohr erwärmt sich durch intermolekulare Reibung von innen heraus (siehe hierzu z. B. G. F. Abele, Kunststoff-Fügeverfahren, Carl Hanser Verlag, München, Wien 1977 oder die Firmenschrift der Fa. Herfurth GmbH, Hamburg "Hochfrequenzschweißen in der Kunststoff-Fügetechnik" aus dem Jahre 1986).

Beim erfindungsgemäßen Verfahren liegt die Zykluszeit in der Regel unterhalb von 1 Minute.

Die erfindungsgemäß umgeformten Rohre haben in der Regel Durchmesser bis etwa 30 mm, wobei die Wandstärken bis ca. 3 mm betragen können. Durch apparative Anpassung können jedoch auch Rohre mit höherem Durchmesser thermogeformt werden.

In einer bevorzugten Ausführungsform der Erfindung wird das Rohr vor dem Thermoformen in eine Schablone eingelegt.

Dieses Verfahren gestattet nicht nur, das Rohr vollständig im HF-Feld zu erwärmen; vielmehr ist es damit möglich, das Rohr nur an den gewünschten Stellen zu erwärmen. Eine mögliche Beeinflussung der Rohreigenschaften durch den Thermoformvorgang findet somit nur im Krümmungsbereich statt.

Das erfindungsgemäße Verfahren kann gleichermaßen mit einschichtigen Rohren als auch mit Mehrschichtrohren durchgeführt werden. Mehrschichtrohre sind Stand der Technik, sie sind aus einer Vielzahl von Patentanmeldungen bekannt (siehe z. B. EP-A-0 730 115 sowie die darin genannte Patentliteratur). Einzig entscheidend ist, daß das Rohr mindestens eine Schicht enthält, die zur Energieabsorption im HF-Feld fähig ist. Beispiele hierfür sind Polyamide wie PA 6, PA 6.6, PA 6.12, PA 11, PA 12; Polyketon; Polyoxymethylen; Polyester wie Polybutylenterephthalat oder Polyvinylidenfluorid.

Im Gegensatz hierzu soll die Schablone aus einem Material bestehen, das im HF-Feld möglichst wenig Energie absorbiert. Geeignete Materialien sind beispielsweise Polytetrafluorethylen, Polypropylen, Polysulfon, Polycarbonat sowie Formmassen auf Basis von Polyphenylenether bzw. Polyphenylenether/Polystyrol-Blends.

Charakteristisch für das erfindungsgemäße Verfahren ist, daß die Wärmefreisetzung im HF-Feld direkt im Rohrmaterial erfolgt, so daß Wärmeleitung praktisch keine Rolle spielt. Damit erzielt man eine schonende Erwärmung ohne thermische Schädigung des Rohres sowie besonders kurze Zykluszeiten. Da nur das Rohr, nicht aber die Umgebung aufgewärmt wird, ist der Energieverbrauch bei diesem Verfahren besonders gering.

Die erfindungsgemäß thermogeformten Rohre können beispielsweise als Kraftstoffleitung, Kühlwasserleitung, Unterdruckleitung, Hydraulikdruckleitung, Kühlmittelleitung oder Pneumatikleitung verwendet werden.

### Beispiel

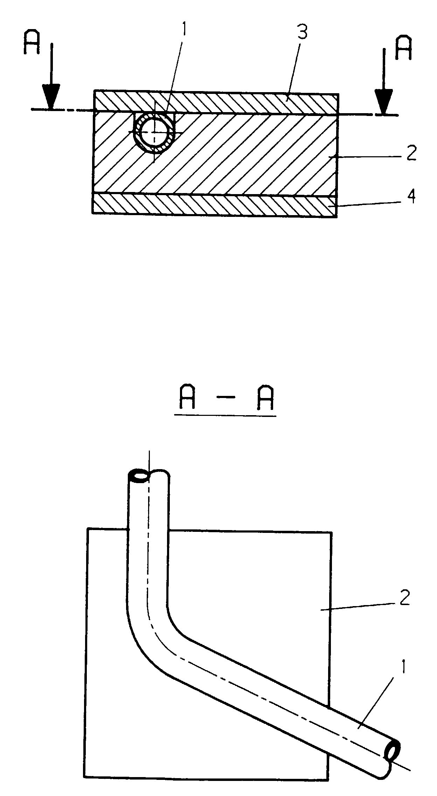

Fig. 1 zeigt eine mögliche Anordnung beim Thermoformen eines Polyamidrohres. In diesem Beispiel wird das Rohr **(1)** in eine Schablone **(2)** eingelegt. Hierzu ist in eine Platte aus Polyethylen die Kontur eingefräst, die das Rohr später besitzen soll. Die Tiefe der Fräsung ist so groß gewählt, daß sich die Oberkante des später eingelegten Rohres nicht oberhalb der Oberfläche der Platte befindet. Auf der Oberseite und der Unterseite befinden sich plattenförmige Elektroden **(3)** und **(4)**, zwischen denen 20 Sekunden lang ein Hochfrequenzfeld erzeugt wird. Anschließend wird das Rohr zur Kühlung mit Luft durchspült und dann aus der Form entnommen.

## Patentansprüche

1. Thermoformverfahren zur Umformung eines Kunststoffrohres,
dadurch gekennzeichnet,
daß die erforderliche Wärme mittels eines Hochfrequenzfeldes eingebracht wird.

2. Verfahren gemäß Anspruch 1,
dadurch gekennzeichnet,
daß das Rohr vor dem Thermoformen in eine Schablone eingelegt wird.

3. Verfahren gemäß einem der vorhergehenden Ansprüche,
dadurch gekennzeichnet,
daß das Kunststoffrohr ein einschichtiges Rohr oder ein Mehrschichtrohr ist.

4. Verfahren gemäß Anspruch 3,
dadurch gekennzeichnet,
daß das Rohr mindestens eine Schicht enthält, die aus Polyamid, Polyketon, Polyoxymethylen, Polyester oder Polyvinylidenfluorid besteht.

5. Verfahren gemäß einem der vorhergehenden Ansprüche,
dadurch gekennzeichnet,
daß das Rohr im Hochfrequenzfeld vollständig oder nur in Teilabschnitten erwärmt wird.

6. Kunststoffrohr, das nach einem Verfahren gemäß einem der vorhergehenden Ansprüche geformt wurde.

7. Verwendung des Kunststoffrohres gemäß Anspruch 6 als Kraftstoffleitung, Kühlwasserleitung, Unterdruckleitung, Hydraulikdruckleitung, Kühlmittelleitung oder Pneumatikleitung.
